(19) **Europäisches Patentamt**
**European Patent Office**
**Office européen des brevets**

(11) **EP 2 661 933 B1**

(12) **EUROPEAN PATENT SPECIFICATION**

(45) Date of publication and mention
of the grant of the patent:
**06.05.2015 Bulletin 2015/19**

(51) Int Cl.:
***H04W 56/00*** (2009.01)  ***H04W 64/00*** (2009.01)

(21) Application number: **11793915.7**

(22) Date of filing: **18.11.2011**

(86) International application number:
**PCT/US2011/061378**

(87) International publication number:
**WO 2012/094064 (12.07.2012 Gazette 2012/28)**

(54) **SYSTEM AND METHOD FOR TIME SYNCHRONIZING WIRELESS NETWORK ACCESS POINTS**

ANORNUNG UND VERFAHREN ZUR ZEITSYNCHRONISIERUNG EINES DRAHTLOSEN NETZZUGANGSPUNKT

SYSTÈME ET MÉTHODE POUR SYNCHRONISER TEMPORELLEMENT UN POINT D'ACCES RÉSEAU SANS FILS.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.01.2011 US 985645**

(43) Date of publication of application:
**13.11.2013 Bulletin 2013/46**

(73) Proprietor: **Qualcomm Incorporated**
**San Diego, CA 92121 (US)**

(72) Inventors:
• **VENKATRAMAN, Sai**
**Santa Clara**
**CA 95051 (US)**

• **SUN, Qinfang**
**Cupertino**
**CA 95014 (US)**

(74) Representative: **Wegner, Hans et al**
**Bardehle Pagenberg Partnerschaft mbB**
**Patentanwälte, Rechtsanwälte**
**Prinzregentenplatz 7**
**81675 München (DE)**

(56) References cited:
**US-A1- 2004 162 084    US-A1- 2005 037 786**
**US-A1- 2010 029 295    US-A1- 2010 030 916**
**US-A1- 2010 080 210**

**Description**

FIELD OF THE PRESENT INVENTION

The present disclosure generally relates to WLAN systems used for tracking the position of devices on the network and more particularly to the synchronization of WLAN access points to facilitate the position determinations.

BACKGROUND OF THE INVENTION

As the number and variety of devices that are capable of communication over a wireless local area network (WLAN) grows, there benefits associated with the determination of position information associated with nodes of the network correspondingly increase. For example, dedicated WLAN tags can be employed identify and trace the movement goods and products throughout an organization. Generally known as real time location services (RTLS), these technologies facilitate tracking of assets and resources, improving logistics in a wide variety of applications. The ability to accurately locate WLAN devices also offers significant security and emergency response benefits.

A number of strategies for providing location information for WLAN devices are possible, including those based on signal timing. Typically, multiple access points (APs) throughout a given environment are responsible for communicating with multiple stations (STAs), that is, the deployed WLAN devices. However, conventional APs usually are not time synchronized, due to the technical difficulties in achieving the synchronization and the expenses of providing the APs with clocks sufficiently accurate to maintain the synchronization.

Without synchronized APs, timing-based positioning can only be achieved by multi-lateration methods using measured round-trip transit times between a STA and multiple APs. As will be appreciated, these round-trip measurements require the STA to send a request to an AP, receive a response from the AP and record the time of departure (TOD) and time of arrival (TOA). Under the correct conditions, the common time delays along the transmitter and receiver chains can be cancelled, at least partially, by taking the difference between pairs of round-trip delays and forming time difference of arrival (TDOA) measurements. In practice, the turn-around interval between the reception of the request at the AP and the corresponding acknowledgement from the AP is not consistent and may vary for devices made by different manufacturers or even for different models from the same manufacturer. Accordingly, it is often very cumbersome to calibrate the response time for every pair of WLAN AP and STA devices, even when they are from the same manufacturer.

Many of the complications associated with difference measurements of signal timing can be avoided if the APs are synchronized to within a few nanoseconds. Instead of relying on calculating round-trip timing measurements, pseudo-ranging techniques similar to global positioning system (GPS) and other global navigation satellite systems (GNSS) can be used to determine the position of STAs very accurately.

Convenient sources for timing information having the requisite accuracy are GNSS. For example, a conventional method for employing timing information from a navigation satellite in a WLAN is to equip the APs with GPS receivers. As will be appreciated, this requires each AP to acquire and track at least four satellites to estimate the time offset from GPS time. Once each AP has the time offset calculated, the AP's clock can be compensated accordingly, so that they are synchronized.

A drawback associated with this approach is that it requires each AP to have adequate GPS reception. Unfortunately, most APs, and particularly those configured for use in a RTLS system, are deployed throughout indoor environments that are not conducive to GPS positioning due to the relatively poor signal reception. Further, the position and time offset estimation is also affected by the relative geometry of the visible GPS satellites and the AP. When an AP has only a partial view of the sky, the resultant geometric dilution of precision (GDOP) can lead to timing errors on the order of tens or even hundreds of nanoseconds, rendering the timing information less suitable for positioning applications.

Additionally, even if GPS reception was sufficient to permit intermittent positioning, thus allowing infrequent timing offset estimation, the accuracy of the reference clocks in the APs is typically insufficient to maintain the necessary synchronization over time. Thus, as a practical matter, it is desirable to track the GPS time offset essentially continuously to prevent a loss of synchronization and minimize frequency drift.

US patent application publication US 2010/0029295 A1 relates to a GPS clock time synchronization method for wireless cellular networks. US 2010/0029295 A1 discloses that a base transceiver station (sync-BTS) comprises a GPS module and that the snyc-BTS may be collocated to an outdoor macro BTS. The document further discloses the usage of a conventional GPS system to obtain the timing information.

Accordingly, there is a need for systems and methods of obtaining timing information for synchronizing devices on a WLAN system. Further, it would be desirable to obtain the timing information without requiring full GPS reception. It would also be desirable to permit pseudo-range positioning of devices in a WLAN. The techniques of this disclosure address these and other needs.

SUMMARY OF THE INVENTION

In accordance with the above needs and those that will be mentioned and will become apparent below, this disclosure is directed to a wireless access point including a receiver portion, a timing signal portion and a clock, wherein the receiver portion is configured to obtain a signal transmitted by a navigation satellite, wherein the timing signal portion is configured to extract timing information from the signal obtained by the receiver portion based upon a known position of the access point and wherein the clock is configured to be compensated with the timing information. Preferably, the receiver portion is configured to obtain a signal from a geostationary satellite. Also preferably, the timing signal portion is configured to correct for atmospheric errors in the signal received from the navigation satellite. As will be recognized, the access point can be configured to provide position information for a mobile station in communication with the access point based upon a pseudo-range calculated using the compensated clock.

In another aspect of the disclosure, the access point has a communication link configured to relay timing information to a second access point and wherein the receiver portion is configured to track a satellite common to the second access point. Preferably, the timing signal portion of the access point in such embodiments is configured to compute a time difference between the access point and the second access point based on a true transit time and a pseudo-transit time for a signal from the satellite. In some embodiments, the communication link comprises a timing server.

The disclosure is also directed to a time-synchronized wireless network having a plurality of access points and a mobile station, wherein each access point is configured to obtain a signal transmitted by a navigation satellite, extract timing information from the signal obtained by the receiver portion based upon a known position of the access point and compensate clocks of the access points based on the timing information so that a position of the mobile station can be determined by performing pseudo-range calculations on signals transmitted between the access points and the mobile station. At least two of the access points can be configured to transmit timing information to each other over a communication link, which can be configured to include a timing server. Preferably, at least two of the access points are configured to track a common satellite and to transmit timing information to each other over a communication link, which can be configured to include a timing server. Also preferably, the common satellite comprises a geostationary satellite.

Furthermore, a suitable time-synchronized wireless network can include a plurality of access points, a mobile station, and a timing server, wherein each access point is configured to obtain a signal transmitted by a navigation satellite and extract timing information from the signal obtained by the receiver portion based upon a known position of the access point and wherein the timings server is configured to compensate clocks of the access point based on the timing information and determine a position of the mobile station by performing pseudo-range calculations on signals transmitted between the access points and the mobile station.

In another aspect, the disclosure is directed to a method for synchronizing a wireless network including the steps of providing a wireless access point, receiving a signal from a navigation satellite with the access point, extracting timing information from the received signal based on a known position of the access point, and compensating the clock of the access point with the timing information. In some embodiments, the step of receiving a signal from a navigation satellite comprises receiving a signal from a geostationary satellite. The methods of this disclosure can also include the step of extracting timing information from the received signal such that the step corrects for atmospheric errors. Other features can include the step of determining position information for a mobile station in communication with the access point by performing pseudo-range calculations based upon the compensated clock.

In yet other aspects, the methods also include providing a second access point, receiving a signal from the navigation satellite with the second access point, extracting timing information from the received signal based on a known position of the second access point, and compensating the clock of the second access point with the timing information. Preferably, such embodiments also include the steps of providing a communication link between the access point and the second access point and relaying timing information over the communication link to synchronize the clocks of the access point and the second access point. As will be appreciated, the step of extracting timing information can include computing a time difference between the access point and the second access point based on a true transit time and a pseudo-transit time for a signal from the satellite. Preferably, the steps of receiving a signal from the navigation satellite can include receiving a signal from a geostationary satellite. Further embodiments can include providing a timing server for the communication link. As desired, the steps of compensating the clocks of the first and second access points can be performed by the timing server.

BRIEF DESCRIPTION OF THE DRAWING

Further features and advantages will become apparent from the following and more particular description of the preferred embodiments of the invention, as illustrated in the accompanying drawing, and in which like referenced characters generally refer to the same parts or elements throughout the views, and in which:

FIG. 1 is a schematic illustration of a one way time transfer implementation of a synchronized WLAN system, according to the invention; and

FIG. 2 is a schematic illustration of a common view time transfer implementation of a synchronized WLAN system, according to the invention.

DETAILED DESCRIPTION OF THE INVENTION

At the outset, it is to be understood that this disclosure is not limited to particularly exemplified materials, architectures, routines, methods or structures as such may, of course, vary. Thus, although a number of such option, similar or equivalent to those described herein, can be used in the practice of embodiments of this disclosure, the preferred materials and methods are described herein.

It is also to be understood that the terminology used herein is for the purpose of describing particular embodiments of this disclosure only and is not intended to be limiting.

Unless defined otherwise, all technical and scientific terms used herein have the same meaning as commonly understood by one having ordinary skill in the art to which the disclosure pertains.

Further, all publications, patents and patent applications cited herein, whether *supra* or *infra*, are hereby incorporated by reference in their entirety.

Finally, as used in this specification and the appended claims, the singular forms "a, "an" and "the" include plural referents unless the content clearly dictates otherwise.

As known to those of skill in the art, conventional GPS position determinations require reception of signal from at least four satellites, so that the four variables associated with a user's location can be determined. Three of the variables correspond to three dimensional coordinates, such as latitude, longitude and altitude. The fourth variable is associated with time and is typically calculated as a time offset in reference to the clock of the GPS satellite. If the APs in a RTLS WLAN system are stationary, those positions in the three dimensional coordinate system can be determined to a high degree of accuracy. Once the three dimensional coordinates are known, reception of signal from a single GNSS satellite can be sufficient to determine the fourth variable, the time offset. Thus, by obtaining the timing information from the GNSS satellite system, the APs essentially use the much more accurate clock of the navigation system, resulting in those APs being synchronized with each other. In the embodiments disclosed below, it is convenient to use the synchronization techniques to compensate each AP's clock relative to the GNSS's common worldwide reference time, the Coordinated Universal Time (UTC). However, it should be recognized that synchronization using alternate time frames, such as a local time frame, can be also be employed.

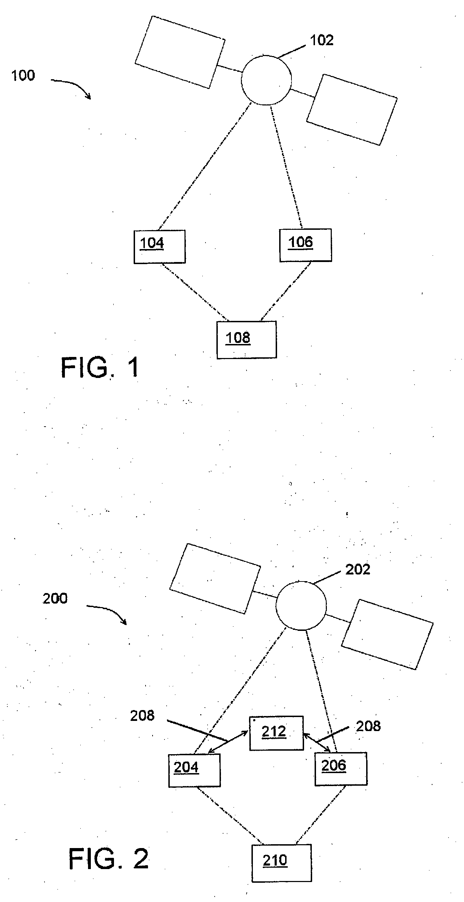

Turning now to Fig. 1, a first embodiment of WLAN synchronization system 100 is shown. A GNSS satellite 102 in orbit is visible to multiple APs, including AP 104 and 106. Preferably, the APs are placed at positions having coordinates known to an accuracy on the order of centimeters. Similarly, the position of satellite 102 can be determined accurately from its ephemeris. GNSS satellites broadcast a timing signal on a phase modulated L-band carrier. Thus, this signal broadcast by satellite 102 is used to effect a one way time transfer to APs 104 and 106. Since the positions of the satellite and AP are known and the APs employ a common coordinate system, the true range or propagation delay between them can be computed accurately. In addition to the clock offset between receiver and GPS time, the pseudorange measurement at APs 104 and 106 include timing errors due to ephemeris errors, signal propagation through the troposphere and ionosphere, and multipath. As discussed below, these errors can be accounted for to a degree that enables estimation of the time offset with respect to satellite 102 on the order of nanoseconds. Since APs 104 and 106 are both synchronized to the reference time of satellite 102, they are essentially synchronized with each other. In turn, this allows the position of STA 108 in communication with them to be determined using pseudo-ranging techniques.

In the one way time transfer embodiments discussed above, a common satellite 102 is disclosed as the source of timing information to improve the synchronization of APs 104 and 106. However, since the timing information from each GNSS satellite generally contains enough details to determine a global reference time for the system, the techniques of this disclosure can also be applied to situations in which the APs receive timing information from different satellites.

In a preferred embodiment, satellite 102 is a Wide Area Augmentation System (WAAS) geostationary satellite that is visible at an elevation angle of 5 degrees or higher. As known to those of skill in the art, the WAAS has been implemented mainly to enable high precision and accuracy for aircraft navigation and landing approaches. WAAS provides differential GPS corrections to improve accuracy and integrity monitoring to improve safety along with a ranging function to improve availability and reliability. WAAS satellites transmit on the same L1 and L5 carriers and use similar pseudorandom code as normal GPS satellites. The received signal levels on earth are also similar to that of GPS. The WAAS clock is maintained at GPS time by ground stations. With respect to the static position of the AP, the WAAS satellite is relatively stationary in its orbit. Although the position of the WAAS satellites can actually change significantly over the course of a day, these variations can be computed accurately from the broadcast ephemeris.

In other embodiments, satellite 102 can include any other suitable GNSS satellite, including one of the normal 24-32 satellites of the GPS system. While the position of such satellites may require more computation, since they are not geostationary, their position can still be computed accurately from their ephemeris. Since only one satellite is necessary for the time offset estimation needed to synchronize the APs, any suitable criteria can be used to select the satellite, including visibility, distance from to the horizon, GDOP, multipath vulnerability and the like. Depending upon the situation, a regular GPS satellite can be easier to acquire and track than a geostationary WAAS satellite. For example, WAAS satellites are overhead or near-Zenith near the equator, but the elevation angle falls as latitude increases. When the latitude becomes too high, it can be desirable to use satellites having better visibility than WAAS satellites. In other embodiments, it can be desirable to select which GNSS satellite to employ based on the positioning of the APs, as they may be located in a manner that allows full or partial visibility of the GPS constellation.

As referenced above, it is preferable to account for a number of errors when estimating the time offset based on reception of the signal from satellite 102. These errors include those based on ephemeris calculations, delays due to the troposphere and ionosphere, multipath interference.

With regard to ephemeris errors, there can be an error in the satellite location and clock given by the ephemeris embedded in the navigation message compared to the true location and clock. WAAS provides long term corrections in the form of ephemeris and ephemeris rate corrections and clock and clock rate corrections. Fast corrections are also provided for rapidly changing GPS clock errors. Other ephemeris corrections can be employed depending upon the choice of satellite 102. Further, in many cellular or WiFi embodiments, APs 104 and 106 are positioned relatively close to one another. As will be recognized, the proximity tends to cancel or minimize ephemeris errors. Similarly, having APs positioned closely also cancels or minimizes satellite clock errors.

The propagation effect due to the troposphere is typically seen as an excess group delay due to refraction of the GPS signal that varies with the elevation of the satellite with respect to the receiver. The delay is normally of the order of 2.6m for a satellite at zenith but can be as large as 20m for satellites closer to the horizon. For WAAS satellites, tropospheric delay cancellation is essential because the satellites hover above the equator and thus are visible in North America at low elevation angles. GNSS satellites do not transmit explicit correction messages for tropospheric delays since it is a local phenomenon. One of skill in the art will recognize that several known estimations of troposphere delay are available to model the delays based on receiver altitude, elevation angle, surface refractivity and other factors and one of these models can be used to compensate for the error. The delay attributable to troposphere conditions is in the range of tens of nanoseconds, and can generally be corrected to within a few nanoseconds.

The primary effects of the ionosphere on a GNSS signal are group delay and ionospheric scintillation that can lead to rapid signal fluctuation at certain latitudes. At low elevation angles, such as below 10°, the excess propagation delay can be as high as 45m at the L-band. GNSS satellite broadcasts include explicit corrections and the ionospheric corrections transmitted by the WAAS satellites are more accurate then the model used in standard GPS. The delay corrections are broadcast as vertical delay estimates at specified Ionospheric Grid Points (IGPs) for signals on L1 band. The density of the grid points is high enough to account for spatial variations in the delay during periods of high solar activity. As the location of the fixed AP is known, it does not need to store all the IGP locations in memory and can use the grid point that is closest to its location. To obtain an accurate correction, the Ionospheric Pierce Point (IPP) of the vector between the AP and observed satellite should be computed to determine the slant delay correction. Further ionospheric correction can be performed if desired with direct measurements using a two-frequency method or with code and carrier phase measurements.

Multipath effects are due to the destructive combination of the direct signal and multiple delayed copies of the satellite received signals from reflected paths. At the receiver, multipath causes a distortion of the correlation function leading to code phase estimation errors. Multipath errors vary with time and depend on the environment in which the receiver is located, antenna and hardware characteristics and receiver design. As known to those of skill in the art, a number of techniques for mitigating multipath effects in GPS and WAAS receivers are available. Currently preferred embodiments feature a geostationary satellite 102, such as a WAAS satellite, to simplify the calibration and compensation for multipath errors due to the relatively static link between the fixed AP and satellite. For example, the periodic nature of many multipath effects allows a significant amount of multipath error to be corrected as a function of time of day. Non-geostationary satellites can also be used, but since their movement relative to the AP is faster compared to a geostationary satellite, more effort is required to calibrate and compensate for multipath errors.

As will be appreciated, APs 104 and 106 require a certain level of functionality to utilize the time synchronization techniques of this disclosure. Preferably, they are capable of receiving the signal from the GNSS satellite. They should also be configured to perform the appropriate tropospheric and ionospheric corrections and to compensate their internal clock using the timing information received from the GNSS satellite. In addition, the ephermeris used by APs 104 and 106 should be identical. For example, each AP should use a valid broadcast ephemeris or the same network-based extended ephemeris or ephemeris self-prediction (ESP). In one aspect, a server can be employed to coordinate the use of a common ephemeris or perform a verification to ensure the ephemeris being used by the APs is identical.

In the embodiments discussed above, timing information is transmitted directly from the satellite to the respective APs in a process generally known as one-way time transfer. Another aspect of this disclosure is directed to the use of at least two APs to receive timing information from a common satellite and to communicate with each other regarding that timing information to improve synchronization. Such techniques are known as common view time transfer and an example of a suitable arrangement is shown in Fig. 2. As shown, WLAN synchronization system 200 includes a GNSS satellite 202 in orbit, visible to multiple APs, including APs 204 and 206. Further, AP 204 and 206 share a communication link 208, allowing a direct comparison of their clocks to compute time differences and coordination regarding which satellite to track. Since the time at which the synchronization information is transmitted between the APs is not critical, any suitable communication technique can be employed, including wired and wireless, and similarly, any suitable protocol can be used to relay the information.

As discussed above, the one way time transfer embodiments require an estimation of tropospheric and ionospheric delay using models and corrections that may not be exact. However, for a network of APs in a common location, such as a single building, these errors can be expected to be almost identical. In such situations, synchronizing a pair of APs using the common view time transfer technique of system 200 allows many of these errors to cancel.

In the embodiment shown here, for example, APs 204 and 206 have a common-view of GNSS satellite 202 and receive a common signal from the satellite transmitted at GPS time T, which is used to establish a reference time in each AP, represented as T' and T" respectively. Similarly, the local times of arrival are represented by $T_{204}$ and $T_{206}$. Given that errors due to GPS-receiver clock offset, tropospheric and ionospheric delays, multipath and satellite ephemeris are present as discussed above, the pseudo-transit times can be computed as $(T_{204}- T')$ and $(T_{206}-T'')$.

Since APs 204 and 206 are fixed, their positions can be determined accurately and satellite 202's position can also be determined accurately from the satellite ephemeris. Accordingly, the true ranges between satellite 202 and the APs 204 and 206, and correspondingly, the true transit times, $t_{202-204}$ and $t_{202-206}$, can be determined. As such, the difference between the pseudo- transit time and the true transit time at each clock consists only of the errors. APs 204 and 206 then communicate these differences to each other over link 208. As a result, the time difference between the APs can be expressed as shown in Equation (1):

$$(1) \quad T_{204\text{-}206} = ((T_{204}- T') - t_{202\text{-}204}) - ((T_{206}- T'') - t_{202\text{-}206})$$

which, given that T' and T" correspond to GPS time T, simplifies to Equation (2):

$$(2) \quad T_{204\text{-}206}= (T_{204}- T_{206}) - (t_{202\text{-}204} - t_{202\text{-}206})$$

One of skill in the art will recognize that when the distance between APs 204 and 206 is only of the order of tens or hundreds of meters, this differencing operation cancels out the common terms due to ephemeris errors, tropospheric and ionospheric delays. Multipath errors at each AP can still require independent calibration using the techniques described above. In currently preferred embodiments, satellite 202 is a geostationary satellite, such as a WAAS satellite, to help simplify the multipath error correction using the principles described in the sections above. However, as described, other factors can influence the desirability of which satellite to employ.

This procedure can be implemented for every pair of APs in system 200 that share a common view of satellite 202. Every AP in system 200 that has compensated its clock using this procedure is correspondingly synchronized, allowing the position of a WLAN device, such as STA 210, to be determined using pseudo-ranging techniques.

As discussed above, APs 204 and 206 communicate over communication link 208. In some embodiments, it can be desirable to configure link 208 to include a timing information server 212. When a server is used to coordinate the synchronization between APs, it can also provide the position information of the APs, ephemeris for the GNSS satellites, multipath corrections and the like. The server can also direct the APs regarding which common satellite to track. Further, systems employing a one-way time transfer, such as system 100, can also be adapted to include a timing server as desired.

In an alternate aspect of the disclosure, the synchronization and positioning calculations can be performed by a timing server. For example, the APs can transmit the timing information obtained from the GNSS satellites measurements to the timing server, allowing it to maintain the real time difference between the APs. A mobile STA can similarly transmit signal timing information, such as TDOA measurements, to the timing server. As will be appreciated, the timing server can then compute a position estimate for the STA in any suitable manner, including obtaining geometric time differences to perform hyperbolic positioning when at least three TDOA measurements are available.

Described herein are presently preferred embodiments. However, one skilled in the art that pertains to the present invention will understand that the principles of this disclosure can be extended easily with appropriate modifications to other applications.

In the following, further examples are described to facilitate the understanding of the invention:

1. A wireless access point comprising a receiver portion, a timing signal portion and a clock, wherein the receiver portion is configured to obtain a signal transmitted by a navigation satellite, wherein the timing signal portion is configured to extract timing information from the signal obtained by the receiver portion based upon a known position of the access point and wherein the clock is configured to be compensated with the timing information.

2. The access point of example 1, wherein the receiver portion is configured to obtain a signal from a geostationary satellite.

3. The access point of example 1, wherein the timing signal portion is configured to correct for atmospheric errors in the signal received from the navigation satellite.

4. The access point of example 1, wherein the access point is configured to provide position information for a mobile station in communication with the access point based upon a pseudo-range calculated using the compensated clock.

5. The access point of example 1, further comprising a communication link configured to relay timing information to a second access point and wherein the receiver portion is configured to track a satellite common to the second access point.

6. The access point of example 5, wherein the timing signal portion is configured to compute a time difference between the access point and the second access point based on a true transit time and a pseudo-transit time for a signal from the satellite.

7. The access point of example 5, wherein the communication link comprises a timing server.

8. A time-synchronized wireless network comprising a plurality of access points and a mobile station, wherein each access point is configured to obtain a signal transmitted by a navigation satellite, extract timing information from the signal obtained by the receiver portion based upon a known position of the access point and compensate clocks of the access points based on the timing information so that a position of the mobile station can be determined by performing pseudo-range calculations on signals transmitted between the access points and the mobile station.

9. The wireless network of example 8, wherein at least two of the access points are configured to transmit timing information to each other over a communication link.

10. The wireless network of example 9, wherein the communication link comprises a timing server.

11. The wireless network of example 8, wherein at least two of the access points are configured to track a common satellite.

12. The wireless network of example 11, wherein the common satellite comprises a geostationary satellite.

13. A time-synchronized wireless network comprising a plurality of access points, a mobile station, and a timing server, wherein each access point is configured to obtain a signal transmitted by a navigation satellite and extract timing information from the signal obtained by the receiver portion based upon a known position of the access point and wherein the timings server is configured to compensate clocks of the access point based on the timing information and determine a position of the mobile station by performing pseudo-range calculations on signals transmitted between the access points and the mobile station.

14. A method for synchronizing a wireless network comprising the steps of:

   a) providing a wireless access point;
   b) receiving a signal from a navigation satellite with the access point;
   c) extracting timing information from the received signal based on a known position of the access point; and
   d) compensating the clock of the access point with the timing information.

15. The method of example 14, wherein the step of receiving a signal from a navigation satellite comprises receiving a signal from a geostationary satellite.

16. The method of example 14, wherein the step of extracting timing information from the received signal comprises correcting for atmospheric errors.

17. The method of example 14, further comprising the step of determining position information for a mobile station in communication with the access point by performing pseudo-range calculations based upon the compensated clock.

18. The method of example 14, further comprising the steps of:

a) providing a second access point;
b) receiving a signal from the navigation satellite with the second access point;
c) extracting timing information from the received signal based on a known position of the second access point; and
d) compensating the clock of the second access point with the timing information.

19. The method of example 18, further comprising the steps of providing a communication link between the access point and the second access point and relaying timing information over the communication link to synchronize the clocks of the access point and the second access point.

20. The method of example 19, wherein the step of extracting timing information comprises computing a time difference between the access point and the second access point based on a true transit time and a pseudo-transit time for a signal from the satellite.

21. The method of example 19, wherein the steps of receiving a signal from the navigation satellite comprises receiving a signal from a geostationary satellite.

22. The method of example 19, wherein the step of providing a communication link comprises providing a timing server.

23. The method of example 22, wherein the steps of compensating the clocks of the first and second access points are performed by the timing server.

**Claims**

1. A wireless access point (104; 106; 204; 206) comprising a receiver portion, a timing signal portion and a clock, wherein the receiver portion is configured to obtain a timing signal transmitted by a single navigation satellite (102; 202), wherein the timing signal portion is configured to extract timing information from the timing signal obtained by the receiver portion based upon a known position of the access point (104; 106; 204; 206) and wherein the clock is configured to be compensated with the timing information.

2. The access point (104; 106; 204; 206) of claim 1, wherein the receiver portion is configured to obtain a signal from a geostationary satellite (102; 202).

3. The access point (104; 106; 204; 206) of claim 1, wherein the access point (104; 106; 204; 206) is configured to provide position information for a mobile station (108; 210) in communication with the access point (104; 106; 204; 206) based upon a pseudo-range calculated using the compensated clock.

4. The access point (104; 106; 204; 206) of claim 1, further comprising a communication link (208) configured to relay timing information to a second access point (104; 106; 204; 206) and wherein the receiver portion is configured to track a satellite (102; 202) common to the second access point (104; 106; 204; 206).

5. The access point (104; 106; 204; 206) of claim 4, wherein the timing signal portion is configured to compute a time difference between the access point (104; 106; 204; 206) and the second access point (104; 106; 204; 206) based on a true transit time and a pseudo-transit time for a signal from the satellite (102; 202), wherein a time reference has been established in each access point (104; 106; 204; 206).

6. A time-synchronized wireless network comprising a plurality of access points (104; 106; 204; 206) in accordance with any of the claims 1 to 5 and a mobile station (108; 210), wherein each access point (104; 106; 204; 206) is configured to obtain a timing signal transmitted by a single navigation satellite (102; 202), extract timing information from the timing signal obtained by the receiver portion based upon a known position of the access point (104; 106; 204; 206) and compensate clocks of the access points (104; 106; 204; 206) based on the timing information so that a position of the mobile station (108; 210) can be determined by performing pseudo-range calculations on signals transmitted between the access points (104; 106; 204; 206) and the mobile station (108; 210).

7. A method for synchronizing a wireless network comprising the steps of:

   a) providing a wireless access point (104; 106; 204; 206);
   b) receiving a timing signal from a single navigation satellite (102; 202) with the access point (104; 106; 204; 206);
   c) extracting timing information from the received timing signal based on a known position of the access point (104; 106; 204; 206); and
   d) compensating the clock of the access point (104; 106; 204; 206) with the timing information.

8. The method of claim 7, wherein the step of receiving a signal from a navigation satellite (102; 202) comprises receiving a signal from a geostationary satellite (102; 202).

9. The method of claim 7, wherein the step of extracting timing information from the received signal comprises correcting for atmospheric errors.

10. The method of claim 7, further comprising the step of determining position information for a mobile station (108; 210) in communication with the access point (104; 106; 204; 206) by performing pseudo-range calculations based upon the compensated clock.

11. The method of claim 7, further comprising the steps of:

    a) providing a second access point (104; 106; 204; 206);
    b) receiving a signal from the navigation satellite (102; 202) with the second access point (104; 106; 204; 206);
    c) extracting timing information from the received signal based on a known position of the second access point (104; 106; 204; 206); and
    d) compensating the clock of the second access point with the timing information.

12. The method of claim 11, further comprising the steps of providing a communication link (208) between the access point (104; 106; 204; 206) and the second access point (104; 106; 204; 206) and relaying timing information over the communication link (208) to synchronize the clocks of the access point (104; 106; 204; 206) and the second access point (104; 106; 204; 206).

13. The method of claim 12, wherein the step of extracting timing information comprises computing a time difference between the access point (104; 106; 204; 206) and the second access point (104; 106; 204; 206) based on a true transit time and a pseudo-transit time for a signal from the satellite (102; 202), wherein a time reference has been established in each access point (104; 106; 204; 206).

14. The method of claim 12, wherein the step of providing a communication link comprises providing a timing server, wherein the access points (104; 106; 204; 206) transmit the timing information obtained from the navigation satellites measurements to the timing server (212), allowing it to maintain the real time difference between the access points (104; 106; 204; 206).

15. The method of claim 14, wherein the steps of compensating the clocks of the first and second access points (104; 106; 204; 206) are performed by the timing server (212).

**Patentansprüche**

1. Drahtloser Zugangspunkt (104; 106; 204; 206), aufweisend einen Empfängerteil, einen Zeitsignalteil und eine Uhr, wobei der Empfängerteil eingerichtet ist zum Beziehen eines Zeitsignals, übertragen von einem einzelnen Navigationssatelliten (102; 202), wobei der Zeitsignalteil eingerichtet ist zum Extrahieren von Zeitinformation von dem Zeitsignal bezogen von dem Empfängerteil basierend auf einer bekannten Position des Zugangspunktes (104; 106; 204; 206) und wobei die Uhr eingerichtet ist, um mit der Zeitinformation ausgeglichen zu werden.

**2.** Zugangspunkt (104; 206; 204; 206) nach Anspruch 1, wobei der Empfängerteil eingerichtet ist zum Beziehen eines Signals von einem geostationären Satelliten (102; 202).

**3.** Zugangspunkt (104; 106; 204; 206) nach Anspruch 1, wobei der Zugangspunkt (104; 106; 204; 206) eingerichtet ist zum Bereitstellen von Positionsinformationen für eine mobile Station (108; 210) in Kommunikation mit dem Zugangspunkt (104; 106; 204; 206) basierend auf einer Pseudoentfernung, berechnet unter Verwendung der ausgeglichenen Uhr.

**4.** Zugangspunkt (104; 106; 204; 206) nach Anspruch 1, weiter aufweisend eine Kommunikationsverbindung (208) eingerichtet zum Weiterleiten von Zeitinformation an einen zweiten Zugangspunkt (104; 106; 204; 206) und wobei der Empfängerteil eingerichtet ist zum Verfolgen eines Satelliten (102; 202) gemäß [common to] dem zweiten Zugangspunkt (104; 106; 204; 206).

**5.** Zugangspunkt (104; 106; 204; 206) nach Anspruch 4, wobei der Zeitsignalteil eingerichtet ist zum Berechnen eines Zeitunterschieds zwischen dem Zugangspunkt (104; 106; 204; 206) und dem zweiten Zugangspunkt (104; 106; 204; 206) basierend auf einer wahren Durchgangszeit und einer Pseudodurchgangszeit für ein Signal von dem Satelliten (102; 202), wobei eine Zeitreferenz in jedem Zugangspunkt (104; 106; 204; 206) eingerichtet wurde.

**6.** Zeitsynchronisiertes drahtloses Netzwerk, aufweisend eine Vielzahl von Zugangspunkten (104; 106; 204; 206) in Übereinstimmung mit einem der Ansprüche 1 bis 5 und eine mobile Station (108; 210), wobei jeder Zugangspunkt (104; 106; 204; 206) eingerichtet ist zum Beziehen eines Zeitsignals, übertragen von einem einzelnen Navigationssatelliten (102; 202), zum Extrahieren von Zeitinformation von dem Zeitsignal bezogen von dem Empfängerteil basierend auf einer bekannten Position des Zugangspunktes (104; 106; 204; 206) und zum Ausgleichen von Uhren der Zugangspunkte (104; 106; 204; 206) basierend auf der Zeitinformation, sodass eine Position der mobilen Station (108; 210) durch Durchführen einer Pseudoentfernungsberechnung auf Signalen, übertragen zwischen den Zugangspunkten (104; 106; 204; 206) und der mobilen Station (108; 210) bestimmt werden kann.

**7.** Verfahren zum Synchronisieren eines drahtlosen Netzwerks, aufweisend die Schritte:

a) Bereitstellen eines drahtlosen Zugangspunktes (104; 106; 204; 206);
b) Empfangen eines Zeitsignals von einem einzelnen Navigationssatelliten (102; 202) mit dem Zugangspunkt (104; 106; 204; 206);
c) Extrahieren von Zeitinformation von dem empfangenen Zeitsignal basierend auf einer bekannten Position des Zugangspunktes (104; 106; 204; 206); und
d) Ausgleichen der Uhr des Zugangspunktes (104; 106; 204; 206) mit der Zeitinformation.

**8.** Verfahren nach Anspruch 7, wobei der Schritt des Empfangens eines Signals von einem Navigationssatelliten (102; 202) Empfangen eines Signals von einem geostationären Satelliten (102; 202) umfasst.

**9.** Verfahren nach Anspruch 7, wobei der Schritt des Extrahierens von Zeitinformation von dem empfangenen Signal ein Berichtigen von atmosphärischen Fehlern umfasst.

**10.** Verfahren nach Anspruch 7, weiter aufweisend den Schritt des Bestimmens einer Positionsinformation für eine mobile Station (108; 210) in Kommunikation mit dem Zugangspunkt (104; 106; 204; 206) durch Durchführen von Pseudoentfernungsberechnungen basierend auf der ausgeglichenen Uhr.

**11.** Verfahren nach Anspruch 7, weiter aufweisend die Schritte:

a) Bereitstellen eines zweiten Zugangspunktes (104; 106; 204; 206);
b) Empfangen eines Signals von dem Navigationssatelliten (102; 202) mit dem zweiten Zugangspunkt (104; 106; 204; 206);
c) Extrahieren von Zeitinformation von dem empfangenen Signal basierend auf einer bekannten Position des zweiten Zugangspunktes (104; 106; 204; 206); und
d) Ausgleichen der Uhr des zweiten Zugangspunktes mit der Zeitinformation.

**12.** Verfahren nach Anspruch 11, weiter aufweisend die Schritte des Bereitstellens einer Kommunikationsverbindung (208) zwischen dem Zugangspunkt (104; 106; 204; 206) und dem zweiten Zugangspunkt (104; 106; 204; 206) und Weiterleiten von Zeitinformation über die Kommunikationsverbindung (208) zum Synchronisieren der Uhren des Zugangspunktes (104; 106; 204; 206) und des zweiten Zugangspunktes (104; 106; 204; 206).

**13.** Verfahren nach Anspruch 12, wobei der Schritt des Extrahierens von Zeitinformation ein Berechnen eines Zeitunterschiedes zwischen dem Zugangspunkt (104; 106; 204; 206) und dem zweiten Zugangspunkt (104; 106; 204; 206) umfasst, basierend auf einer wahren Durchgangszeit und einer Pseudodurchgangszeit für ein Signal von dem Satelliten (102; 202), wobei eine Zeitreferenz in jedem Zugangspunkt (104; 106; 204; 206) eingerichtet wurde.

**14.** Verfahren nach Anspruch 12, wobei der Schritt des Bereitstellens einer Kommunikationsverbindung ein Bereitstellen eines Zeitservers umfasst, wobei die Zugangspunkte (104; 106; 204; 206) die Zeitinformation übertragen, bezogen von den Navigationssatellitenmessungen zu dem Zeitserver (212), was es ihm ermöglicht, den Echtzeitunterschied zwischen den Zugangspunkten (104; 106; 204; 206) einzuhalten.

**15.** Verfahren nach Anspruch 14, wobei die Schritte des Ausgleichens der Uhren des ersten und zweiten Zugangspunktes (104; 106; 204; 206) von dem Zeitserver (212) durchgeführt werden.

**Revendications**

**1.** Un point d'accès sans fil (104 ; 106 ; 204 ; 206) comprenant une partie de récepteur, une partie de signal de séquencement et une horloge, dans lequel la partir de récepteur est configurée pour obtenir un signal de séquencement émis par un satellite de navigation isolé (102 ; 202), dans lequel la partie de signal de séquencement est configurée pour extraire des informations de séquencement à partir du signal de séquencement obtenu par la partie de récepteur sur la base d'une position connue du point d'accès (104 ; 106 ; 204 ; 206) et dans lequel l'horloge est configurée pour être compensée par les informations de séquencement.

**2.** Le point d'accès (104 ; 106 ; 204 ; 206) de la revendication 1, dans lequel la partie de récepteur est configurée pour obtenir un signal en provenance d'un satellite géostationnaire (102 ; 202).

**3.** Le point d'accès (104 ; 106 ; 204 ; 206) de la revendication 1, dans lequel le point d'accès (104 ; 106 ; 204 ; 206) est configuré pour délivrer des informations de position pour une station mobile (108 ; 210) en communication avec le point d'accès (104 ; 106 ; 204 ; 206) sur la base d'une pseudodistance calculée en utilisant l'horloge compensée.

**4.** Le point d'accès (104 ; 106 ; 204 ; 206) de la revendication 1, comprenant en outre une liaison de communication (208) configurée pour relayer les informations de séquencement vers un second point d'accès (104 ; 106 ; 204 ; 206), et dans lequel la partie de récepteur est configurée pour suivre un satellite (102 ; 202) commun au second point d'accès (104 ; 106 ; 204 ; 206).

**5.** Le point d'accès (104 ; 106 ; 204 ; 206) de la revendication 4, dans lequel la partie de signal de séquencement est configurée pour calculer une différence temporelle entre le point d'accès (104 ; 106 ; 204 ; 206) et le second point d'accès (104 ; 106 ; 204 ; 206) sur la base d'un instant de transition vraie et d'un instant de pseudotransition pour un signal en provenance du satellite (102 ; 202), dans lequel une référence temporelle a été établie dans chaque point d'accès (104 ; 106 ; 204 ; 206).

**6.** Un réseau sans fil synchronisé temporellement comprenant une pluralité de points d'accès (104 ; 106 ; 204 ; 206) selon l'une des revendications 1 à 5 et une station mobile (108 ; 210), dans lequel chaque point d'accès (104 ; 106 ; 204 ; 206) est configuré pour obtenir un signal de séquencement émis par un satellite de navigation isolé (102 ; 202) ; extraire des informations de séquencement à partir du signal de séquencement obtenu par la partie de récepteur sur la base d'une position connue du point d'accès (104 ; 106 ; 204 ; 206) et compenser les horloges des points d'accès (104 ; 106 ; 204 ; 206) sur la base des informations de séquencement de sorte qu'une position de la station mobile (108 ; 210) puisse être déterminée en effectuant des calculs de pseudodistance sur des signaux émis entre les points d'accès (104 ; 106 ; 204 ; 206) et la station mobile (108 ; 210).

**7.** Un procédé de synchronisation d'un réseau sans fil, comprenant les étapes de :

a) mise en place d'un point d'accès sans fil (104 ; 106 ; 204 ; 206) ;
b) réception d'un signal de séquencement en provenance d'un satellite de navigation isolé (102 ; 202) avec le point d'accès (104 ; 106 ; 204 ; 206) ;
c) extraction d'une information de séquencement à partir du signal de séquencement reçu sur la base d'une position connue du point d'accès (104 ; 106 ; 204 ; 206) ; et

d) compensation de l'horloge du point d'accès (104 ; 106 ; 204 ; 206) par les informations de séquencement.

8. Le procédé de la revendication 7, dans lequel l'étape de réception du signal en provenance d'un satellite de navigation (102 ; 202) comprend la réception d'un signal en provenance d'un satellite géostationnaire (102 ; 202).

9. Le procédé de la revendication 7, dans lequel l'étape d'extraction des informations de séquencement à partir du signal reçu comprend une correction des erreurs atmosphériques.

10. Le procédé de la revendication 7, comprenant en outre l'étape de détermination d'informations de position pour une station mobile (108 ; 210) en communication avec le point d'accès (104 ; 106 ; 204 ; 206) par exécution de calcul de pseudodistance sur la base de l'horloge compensée.

11. Le procédé de la revendication 7, comprenant en outre les étapes suivantes :

a) mise en place d'un second point d'accès (104 ; 106 ; 204 ; 206) ;

b) réception d'un signal en provenance du satellite de navigation (102 ; 202) avec le second point d'accès (104 ; 106 ; 204 ; 206) ;

c) extraction d'une information de séquencement à partir du signal reçu sur la base d'une position connue du second point d'accès (104 ; 106 ; 204 ; 206) ; et

d) compensation de l'horloge du second point d'accès par l'information de séquencement.

12. Le procédé de la revendication 11, comprenant en outre les étapes de mise en place d'une liaison de communication (208) entre le point d'accès (104 ; 106 ; 204 ; 206) et le second point d'accès (104 ; 106 ; 204 ; 206) et de relais des informations de séquencement via la liaison de communication (208) pour synchroniser les horloges du point d'accès (104 ; 106 ; 204 ; 206) et du second point d'accès (104 ; 106 ; 204 ; 206).

13. Le procédé de la revendication 12, dans lequel l'étape d'extraction des informations de séquencement comprend le calcul d'une différence temporelle entre le point d'accès (104 ; 106 ; 204 ; 206) et le second point d'accès (104 ; 106 ; 204 ; 206) sur la base d'un instant de transition vraie et d'un instant de pseudotransition pour un signal en provenance du satellite (102 ; 202), une référence temporelle ayant été établie dans chaque point d'accès (104 ; 106 ; 204 ; 206).

14. Le procédé de la revendication 12, dans lequel l'étape de mise en place d'une liaison de communication comprend la mise en place d'un serveur de séquencement, dans lequel les points d'accès (104 ; 106 ; 204 ; 206) émettent les informations de séquencement obtenues à partir de mesures de satellites de navigation au serveur de séquencement (212), en permettant à celui-ci de conserver la différence temporelle réelle entre les points d'accès (104 ; 106 ; 204 ; 206).

15. Le procédé de la revendication 14, dans lequel les étapes de compensation des horloges du premier et du second point d'accès (104 ; 106 ; 204 ; 206) sont exécutées par le serveur de séquencement (212).

100

102

104     106

108

# FIG. 1

200

202

208     208

212

204     206

210

# FIG. 2

**EP 2 661 933 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100029295 A1